# EUROPÄISCHE PATENTSCHRIFT

(11) **EP 0 563 717 B1**
(45) Veröffentlichungstag und Bekanntmachung des Hinweises auf die Patenterteilung: **08.11.1995**
(21) Anmeldenummer: 93104612.2
(22) Anmeldetag: 20.03.1993
(51) Int. Cl.: B01D 53/34, B01D 53/18, C07D 251/62, B01J 19/26

(54) **Vorrichtung zur Abscheidung von Melamin**
Apparatus for separating melamine
Appareil pour la séparation de mélamine

(30) Priorität: 30.03.1992 AT 630/92
(43) Veröffentlichungstag der Anmeldung: 06.10.1993
(73) Patentinhaber: Agrolinz Melamin GmbH, A-4021 Linz (AT)
(72) Erfinder: Szölgyenyi, Gerald, Dipl.-Ing., Dr., A-4040 Linz (AT); Hildebrand, Peter, A-4040 Linz (AT)
(74) Vertreter: Kunz, Ekkehard, Dr.

(56) Entgegenhaltungen:
- EP-A- 0 094 665
- AT-A- 244 345
- US-A- 3 308 123
- DATABASE WPI Section Ch, Week 9116, Derwent Publications Ltd., London, GB; Class A41, AN 91-115694 & SU-A-1 567 253 (KIROVAKAN CHEM WKS) 30. Mai 1990

## Beschreibung

Die Erfindung betrifft eine Vorrichtung zur Abscheidung von Melamin aus den heißen Reaktionsgasen.

Aus der AT-PS 244.345 ist bekannt, das bei der katalytischen Melaminsynthese erhaltene Melamin aus den heißen Reaktionsgasen beispielsweise durch Abkühlung an gekühlten Metallwänden oder in einer Wirbelschicht von Melaminkristallen abzuscheiden. Das erhaltene Rohmelamin ist dabei sehr verunreinigt und muß durch aufwendiges Umkristallisieren gereinigt werden. Reines Melamin ohne zusätzliches Umkristallisieren kann gemäß der in der AT-PS 244.345 beschriebenen Erfindung dadurch erhalten werden, daß die heißen, Melamin enthaltenden Reaktionsgase zur Vermeidung von Zersetzungsreaktionen und Verunreinigungen nach der Synthese direkt in einer Waschflüssigkeit abgeschieden werden. Bei diesem Verfahren wird zwar reines Melamin in sehr einfacher Weise erhalten, es besitzt jedoch den Nachteil, daß an der Eintrittsstelle der Reaktionsgase in die Abscheidevorrichtung sehr hohe Reaktionsgastemperaturen von etwa 440 °C erforderlich sind, um Ablagerungen von Melamin bzw. ein Verstopfen der Apparatur mit festem Melamin zu verhindern.
Die Aufgabe der Erfindung war es, eine Vorrichtung zu finden, mit der die Melaminabscheidung auch bei niedrigeren Reaktionsgastemperaturen möglich ist. Es wurde unerwarteterweise gefunden, daß diese Aufgabe durch eine Kombination verschiedener Konstruktionsmaßnahmen gelöst werden kann, bei der einerseits beheizbare Apparateteile und andererseits Apparateteile, die ein Zurückströmen der Reaktionsgase aus dem Absorptionsbehälter erschweren, verwendet werden.

Gegenstand der Erfindung ist demnach eine Vorrichtung zur Abscheidung von Melamin aus heißen Reaktionsgasen in eine Waschflüssigkeit, bestehend aus einem unten offenen Gaszuführungsrohr (1) für die heißen Reaktionsgase (7), das mit dem unteren Ende in ein koaxiales Absorptionsrohr (2) mündet und einem, den oberen Teil des Absorptionsrohres (2) und das Gaszuführungsrohr (1) umgebenden geschlossenen Behälter (3), der als Vorrats- und Überlaufgefäß für die Waschflüssigkeit (10) dient, aus dem die Innenwand des Absorptionsrohres (2) ständig mit nachfließender Waschflüssigkeit (10) bespült wird, wobei der Behälter (3) oberhalb seines Flüssigkeitsspiegels ein Zuführungsrohr (8) für Inertgase und unterhalb des Flüssigkeitsspiegels ein Zuführungsrohr (9) für die Waschflüssigkeit (10) enthält, dadurch gekennzeichnet, daß das Gaszuführungsrohr (1) beheizbar ist und daß am Gaszuführungsrohr (1) eine in das Absorptionsrohr (2) ragende Verlängerungsdüse (4) angeordnet ist.

Durch die erfindungsgemäße Ausrüstung der Melamin-Abscheidevorrichtung mit einer Beheizung und einer Verlängerungsdüse wird das Zurückströmen der Reaktionsgase aus dem Absorptionsbehälter (3) bzw. in dessen obere Teile, die nicht von Waschflüssigkeit (10) bespült sind, erschwert bzw. verhindert. Dadurch ist es mit der erfindungsgemäßen Vorrichtung möglich, auch bei niedrigeren Reaktionsgastemperaturen von etwa 325 - 400 °C ein Verstopfen der Apparatur mit festem Melamin zu vermeiden.
Trotz der beispielsweise aus G. van der Plaats et al, Proc. Second European Symposium on Thermal Analysis (Chem. Abstr. 96 (7): 51647f), Seite 215 bekannten Tatsache, daß sich Melamin bei Temperaturen über 300 °C zu zersetzen beginnt, beispielsweise zu Melem oder Melam, konnten an den beheizten Teilen der erfindungsgemäßen Vorrichtung keine thermischen Zersetzungsprodukte des Melamins festgestellt werden.

Die bei Verwendung der erfindungsgemäßen Vorrichtung mögliche niedrigere Eintrittstemperatur der Reaktionsgase in die Abscheidevorrichtung erlaubt eine wesentlich verbesserte Energienutzung im Vergleich zu konventionellen Melamin-Abscheidevorrichtungen. Die mit etwa 440 °C aus dem Kontaktofen austretenden Reaktionsgase können beispielsweise vor dem Eintritt in die Abscheidevorrichtung mit Hilfe eines Wärmetauschers bis etwa 325 bis 400 °C abgekühlt werden. Die dabei gewonnene große Wärmemenge kann in den Synthesekreislauf rückgeführt werden, wodurch eine wesentliche Energieeinsparung erzielt wird.

Es erweist sich als vorteilhaft, auch den Raum um das Gaszuführungsrohr (1) im oberen Teil des Behälters (3) mit Hilfe einer Heizvorrichtung (6) beheizbar auszurüsten. Die Heizvorrichtung (6) ragt bevorzugt in den oberen Teil des Behälters (3). Als Heizvorrichtungen (6) kommen beispielsweise Heizdrähte, Heizstäbe, Heizspiralen oder anders geformte beheizbare Einbauten in Frage. Bevorzugt ist die Heizvorrichtung (6) in Form eines am oberen Teil des Gaszuführungsrohres (1) angeordneten, nach unten in den Behälter (3) ragenden, beheizbaren Mantelrohres (6') ausgeführt.

Das Gaszuführungsrohr (1) und die Heizvorrichtung (6) können beispielsweise elektrisch oder mit Heizmedien beheizt werden. Bevorzugt erfolgt die Beheizung elektrisch oder mit einer Heizflüssigkeit wie z.B. Silikonölen, Diphyl oder Salzschmelzen.

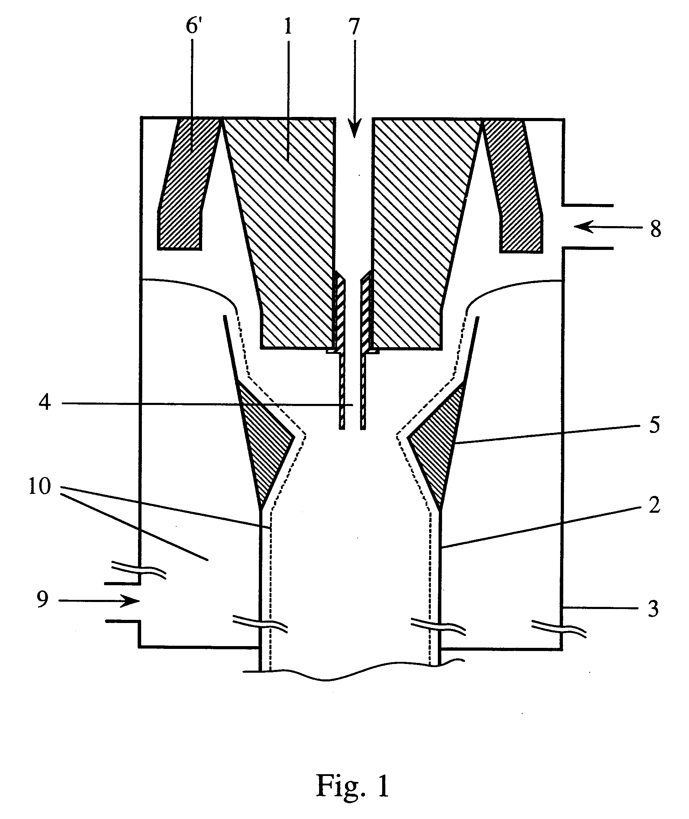

Um das Zurückströmen der Reaktionsgase aus dem Absorptionsrohr (2) zusätzlich zu erschweren bzw. zu verhindern, erweist es sich weiters als vorteilhaft,im Absorptionsrohr (2) im Bereich der Verlängerungsdüse (4) eine Verengung (5) des Querschnittes anzuordnen. Die Verengung (5) im Absorptionsrohr (2) erfolgt beispielsweise durch Einschieben eines entsprechend dimensionierten Ringes in das Absorptionsrohr (2), das z.B. wie in Figur 1 gezeigt, im oberen Teil trichterförmig erweitert sein kann. Es ist auch möglich, innerhalb des Absorptionsrohres (2) zur Verengung des Querschnittes einen ringförmigen Wulst anzuschweißen oder das Absorptionsrohr (2) entsprechend dieser Form auszubilden. Bevorzugt ist der Querschnitt des Absorptionsrohres (2) durch die Verengung (5) um etwa 50 - 80 % vermindert.
In Figur 1 ist eine mögliche Ausführungsform der erfindungsgemäßen Melaminabscheidevorrichtung dargestellt, in der (1) ein beheizbares Gaszuführungsrohr für die heißen Reaktionsgase (7) darstellt, das in das Absorptionsrohr (2) hineinragt. (3) stellt den Vorratsbehälter für die Waschflüssigkeit (10) dar. (4) ist eine am Gaszuführungsrohr (1) angebrachte Verlängerungsdüse, (5) eine Engstelle im Absorptionsrohr (2) und (6') ein im oberen Teil des Behälters (2) am Gaszuführungsrohr (1) angeordnetes, beheizbares Mantelrohr. (8) stellt ein Zuführungsrohr für Inertgase und (9) ein Zuführungsrohr für die Waschflüssigkeit (10) dar.

Die in den Behälter (3) gepumpte Waschflüssigkeit (10) fließt über den oberen Rand des Absorptionsohres (2) und weiter, die Innenwände des Absorptionsrohres (2) bespülend, abwärts in einen - hier nicht gezeigten - Abscheidebehälter. Die Waschflüssigkeit wird im Kreislauf wieder in den Vorratsbehälter (3) Zurückgeführt. Das mit den heißen Reaktionsgasen (7) eingebrachte Melamin wird in die an den Innenwänden des Absorptionsrohres (2) herabfließende Waschflüssigkeit (10) abgeschieden und gelangt mit der Waschflüssigkeit (10) in den - hier nicht gezeigten - Abscheidebehälter, wo Melamin und sonstige Anteile des Reaktionsgases, beispielsweise Ammoniak und CO₂ abgeschieden werden.

Die Verlängerungsdüse (4) ragt bevorzugt etwa bis in den Bereich der Verengung (5) in das Absorptionsrohr (2). Je weiter die Verlängerungsdüse (4) in das Absorptionsrohr (2) hineinragt, desto geringer ist der Rückstrom der Reaktionsgase in die oberen, nicht von Waschflüssigkeit (10) bespülten und nicht beheizten Teile der Apparatur, und desto geringer ist die Gefahr des Verstopfens der Apparatur an diesen Teilen durch festes Melamin. Andererseits darf die Verlängerungsdüse (4) jedoch maximal nur so weit in das Absorptionsrohr (2) hineinragen, daß es sich an seiner Spitze aufgrund des Kühleffektes durch die umgebende, am Absorptionsrohr herabfließende Waschflüssigkeit (10) mit einer Temperatur von etwa 50 - 100 °C nicht unter etwa 320 °C abkühlt, da ansonsten die Gefahr des Verstopfens mit festem Melamin besteht.

Die Heizvorrichtung (6) ragt vorteilhafterweise so weit in den Vorratsbehälter (3), daß sie zum Flüssigkeitsspiegel der Waschflüssigkeit (10) einen Abstand aufweist, der etwa der einfachen bis sechsfachen, bevorzugt der einfachen bis dreifachen Dicke des an der Innenseite des Absorptionsrohres (2) herabfließenden Filmes der Waschflüssigkeit (10) entspricht. Die Dicke des Filmes der Waschflüssigkeit hängt insbesondere von der Größe der Anlage und dem Durchsatz ab, sie beträgt beispielsweise bei der in Figur 1 gezeigten Laboranlage etwa 1 bis 5 mm. Der Abstand zwischen Gaszuführungsrohr (1) und der innen am Absorptionsrohr (2) herabströmenden Waschflüssigkeit (10) liegt vorteilhafterweise ebenfalls bei etwa der einfachen bis sechsfachen, bevorzugt der einfachen bis dreifachen Dicke der innen am Absorptionsrohr herabströmenden Waschflüssigkeit.

### Beispiel 1:

Die aus einem Melaminsyntheseofen austretenden Reaktionsgase wurden über einen Wärmetauscher von 440 °C auf 380 °C abgekühlt und über das Gaszuführungsrohr (1) kontinuierlich in die erfindungsgemäße, in Figur 1 dargestellte Melaminabscheidevorrichtung (Maßstab 1 : 1) mit einem Durchsatz von 300 l/h eingeleitet. Das Gaszuführungsrohr (1) und das Mantelrohr (6') wurden elektrisch auf 380 °C beheizt. Beim Zuführungsrohr (8) wurden 150 l/h Stickstoff als Spülgas mit einer Temperatur von 380 °C eingeleitet, beim Zuführungsrohr (9) wurden etwa 160 l/h Waschflüssigkeit (10) in den Behälter (3) gepumpt. Die Temperatur der Waschflüssigkeit im Behälter lag bei etwa 70 °C. Die Waschflüssigkeit (10) floß über den oberen Rand des Absorptionsrohres (2) in dieses über und an dessen Innenwand herab. Die Innenwand wurde dabei mit einem etwa 2 mm dicken Film der Waschflüssigkeit benetzt. Das mit den Reaktionsgasen eintretende Melamin wurde in der herabfließenden Waschflüssigkeit abgeschieden und gelangte mit dieser in einen - hier nicht gezeichneten - Abscheidebehälter, in dem Melamin und sonstige Anteile des Reaktionsgases abgeschieden wurden. Die Waschflüssigkeit wurde dann wieder in den Behälter (3) zurückgepumpt.

Die erfindungsgemäße Melaminabscheidevorrichtung konnte ohne Störungen betrieben werden. Der Versuch wurde nach 48 Stunden abgebrochen, wobei nur geringfügige Ablagerungen ohne Einfluß auf den Betrieb der Anlage zu erkennen waren.

### Vergleichsbeispiel 2:

Analog zu Beispiel 1 wurden die Reaktionsgase mit einer Temperatur von 380 °C in eine Melaminabscheidevorrichtung geleitet, die sich von jener gemäß Beispiel 1 dadurch unterschied, daß das Gaszuführungsrohr (1) nicht beheizt wurde, sowie dadurch, daß die Verlängerungsdüse (4), die Engstelle (5) und das Mantelrohr (6') fehlten. Die Apparatur wurde nach 2 Stunden durch festes Melamin verstopft, sodaß der Betrieb der Anlage unterbrochen werden mußte.

## Patentansprüche

1. Vorrichtung zur Abscheidung von Melamin aus heißen Reaktionsgasen in eine Waschflüssigkeit, bestehend aus einem unten offenen Gaszuführungsrohr (1) für die heißen Reaktionsgase (7), das mit dem unteren Ende in ein koaxiales Absorptionsrohr (2) mündet und einem, den oberen Teil des Absorptionsrohres (2) und das Gaszuführungsrohr (1) umgebenden geschlossenen Behälter (3), der als Vorrats- und Überlaufgefäß für die Waschflüssigkeit (10) dient, aus dem die Innenwand des Absorptionsrohres (2) ständig mit nachfließender Waschflüssigkeit (10) bespült wird, wobei der Behälter (3) oberhalb seines Flüssigkeitsspiegels ein Zuführungsrohr (8) für Inertgase und unterhalb des Flüssigkeitsspiegels ein Zuführungsrohr (9) für die Waschflüssigkeit (10) enthält, dadurch gekennzeichnet daß das Gaszuführungsrohr (1) beheizbar ist und daß am Gaszuführungsrohr (1) eine in das Absorptionsrohr (2) ragende Verlängerungsdüse (4) angeordnet ist.

2. Vorrichtung gemäß Anspruch 1, dadurch gekennzeichnet, daß der Raum um das Gaszuführungsrohr (1) im oberen Teil des Behälters (3) mit Hilfe einer Heizvorrichtung (6) beheizbar ist.

3. Vorrichtung gemäß Anspruch 2, dadurch gekennzeichnet, daß die Heizvorrichtung (6) ein am oberen Teil des Gaszuführungsrohres (1) angeordnetes, nach unten in den Behälter (3) ragendes, beheizbares Mantelrohr (6') ist.

4. Vorrichtung gemäß einem der Ansprüche 1 bis 3, dadurch gekennzeichnet, daß das Gaszuführungsrohr (1) und die Heizvorrichtung (6) elektrisch oder mit einer Heizflüssigkeit beheizbar sind.

5. Vorrichtung gemäß einem der Ansprüche 1 bis 4, dadurch gekennzeichnet, daß das Absorptionsrohr (2) im Bereich der Verlängerungsdüse (4) eine Verengung (5) des Querschnittes aufweist.

6. Vorrichtung gemäß Anspruch 5, dadurch gekennzeichnet, daß der Querschnitt des Absorptionsrohres (2) durch die Verengung (5) um etwa 50 bis 80 % vermindert ist.

## Claims

1. Apparatus for the deposition of melamine from hot reaction gases into a wash liquid, consisting of a gas feed pipe (1) for the hot reaction gases (7) which is open at the bottom and whose lower end enters a coaxial absorption pipe (2), and a closed container (3) which surrounds the upper part of the absorption pipe (2) and the gas feed pipe (1) and serves as a storage vessel and overflow vessel for the wash liquid (10) and from which the inner wall of the absorption pipe (2) is constantly washed with flowing wash liquid (10), the container (3) containing a feed pipe (8) for inert gases above its liquid level and containing a feed pipe (9) for the wash liquid (10) below the liquid level, characterized in that the gas feed pipe (1) is heatable and in that an extension nozzle (4) projecting into the absorption pipe (2) is arranged on the gas feed pipe (1).

2. Apparatus according to Claim 1, characterized in that the space around the gas feed pipe (1) in the upper part of the container (3) is heatable with the aid of a heating apparatus (6).

3. Apparatus according to Claim 2, characterized in that the heating apparatus (6) is a heatable jacketed pipe (6') which is arranged on the upper part of the gas feed pipe (1) and projects downward into the container (3).

4. Apparatus according to any of Claims 1 to 3, characterized in that the gas feed pipe (1) and the heating apparatus (6) can be heated electrically or by means of a heating liquid.

5. Apparatus according to any of Claims 1 to 4, characterized in that the absorption pipe (2) has a constriction (5) of the cross-section in the region of the extension nozzle (4).

6. Apparatus according to Claim 5, characterized in that the cross-section of the absorption pipe (2) is reduced by about 50 to 80% by the constriction (5).

## Revendications

1. Dispositif pour la séparation de mélamine à partir de gaz chauds de réaction, dans un liquide de lavage, formé d'un tube (1) d'amenée de gaz ouvert vers le bas pour les gaz chauds de réaction (7), qui débouche dans un tube coaxial d'absorption (2) par son extrémité inférieure, et d'une cuve fermée (3), qui entoure la partie supérieure du tube d'absorption (2) et le tube (1) d'amenée de gaz, qui sert de récipient de stockage et de trop-plein pour le liquide de lavage (10), à partir duquel la paroi intérieure du tube d'absorption (2) est arrosée en continu par le liquide de lavage (10) dont l'apport est renouvelé, la cuve (3) contenant, au-dessus de son niveau de liquide, un tube d'amenée (8) pour des gaz inertes et, au-dessous de son niveau de liquide, un tube d'amenée (9) pour le liquide de lavage (10), caractérisé en ce que le tube (1) d'amenée de gaz peut être chauffé et qu'une tuyère de rallonge (4) dépassant dans le tube d'absorption (2) est disposée sur le tube (1) d'amenée de gaz.

2. Dispositif selon la revendication 1, caractérisé en ce que l'espace situé autour du tube (1) d'amenée de gaz dans la partie supérieure de la cuve (3) peut être chauffé à l'aide d'un dispositif de chauffage (6).

3. Dispositif selon la revendication 2, caractérisé en ce que le dispositif de chauffage (6) est un tube à chemise (6') qui peut être chauffé, disposé sur la partie supérieure du tube (1) d'amenée de gaz et dépassant vers le bas dans la cuve (3).

4. Dispositif selon l'une des revendications 1 à 3, caractérisé en ce que le tube (1) d'amenée de gaz et le dispositif de chauffage (6) peuvent être chauffés électriquement ou avec un liquide de chauffage.

5. Dispositif selon l'une des revendications 1 à 4, caractérisé en ce que le tube d'absorption (2) présente un rétrécissement (5) de sa section transversale dans la région de la tuyère de rallonge (4).

6. Dispositif selon la revendication 5, caractérisé en ce que la section transversale du tube d'absorption (2) est réduite d'environ 50 à 80 % grâce au rétrécissement (5).
